# EUROPEAN PATENT SPECIFICATION

(11) **EP 4 354 126 B1**
(45) Date of publication and mention of the grant of the patent: **18.06.2025**
(21) Application number: 22461620.1
(22) Date of filing: 12.10.2022
(51) Int. Cl.: G01N 22/04

(54) **A METHOD, A MEASUREMENT SETUP AND COMPUTER PROGRAM PRODUCT FOR SENSING FUEL CONTAMINATION**
VERFAHREN, MESSAUFBAU UND COMPUTERPROGRAMMPRODUKT ZUR ERFASSUNG VON KRAFTSTOFFKONTAMINATION
PROCÉDÉ, CONFIGURATION DE MESURE ET PRODUIT DE PROGRAMME INFORMATIQUE POUR DÉTECTER UNE CONTAMINATION DE CARBURANT

(43) Date of publication of application: 17.04.2024
(73) Proprietor: Instytut Wysokich Cisnien Polskiej Akademii Nauk, 01-142 Warszawa (PL)
(72) Inventor: MIKHNEV, Valeri, 02-384 Warszawa (PL); KNAP, Wojciech, 05-807 Podkowa Lesna (PL); SKOTNICKI, Tomasz, 02-786 Warszawa (PL); STELMASZCZYK, Kamil, Warszawa (PL)
(74) Representative: AOMB Polska Sp. z.o.o.

(56) References cited:
- RU-C1- 2 661 349
- US-A1- 2013 283 892

## Description

### Field of the invention

The invention concerns a method, a measurement setup and computer program product for sensing water contamination in fluid fuels especially diesel and gasoline.

### State of the art

Fluid fuels are often contaminated with water. Water can be incorporated in fuel during production, transportation and storage due to condensation or handling and environmental conditions. The water may exist in the petroleum products in soluble, free, and emulsified forms. Solubility of water in pure diesel and gasoline is very low, about 0.005-0.015% i.e. 50-150 ppm depending on temperature and also on the composition of the fuel; notably, the tolerance of biodiesel to water is several times higher.

Water in emulsified and free state is rather harmful to engines. So, for modern injectors with micron tolerances, the injector when exposed to fuel with a water content of 0.05% i.e. 500 ppm has a life time reduced by about half comparing to situation where contamination is 0.02% i.e. 200 ppm. Water content at or above 0.05% may cause damage to the fuel injection system. That is, why the maximum amount of allowed water content in diesel was limited to 500 ppm (ASTM standard D6751). The recent standards, such as EN590 of European Union, are even more severe, the water content in the fuel must not exceed 200 ppm. That is very close to the solubility limit (50-150 ppm) . Thus, only very little extra amount of emulsified or free water is allowed in addition to the soluble form to meet the restrictions of the standard.

The Karl Fischer coulometric titration method suggested in EN590 for the determination of water content is quite accurate and allows to measure the water content independently of its form in the range of 30-1000 ppm. However, this method is not suitable for fast, in-line monitoring.

There is a variety of indirect methods for the evaluation of water content in petroleum products. The most widespread of them use resistive and capacitive sensors. Their principle of operation is based on the fact that the presence of water in fuel results in increase of dielectric constant of the mixture, due to very high dielectric constant of water (capacitive sensors) and growth of electric conductivity of the mixture that can be detected by the resistive sensors. Unfortunately, even the most sensitive sensors of these types (e.g. EASZ-2 of EESIFLO http://eesiflo.com/water_in_fuel.html) are not accurate enough, their measurement accuracy is limited to 0.05% (± 500 ppm). The resistive sensors are even less accurate and serve mostly as indicators of presence/absence of water collected in the bottom of tanks or fuel filters.

Microwave methods are also sensitive to water in the petroleum products due to a high difference between dielectric constant of water -approximately 65 at the frequency of 1 GHz, and that of hydrocarbons - having dielectric constant of approximately 2 to 2.5. Additionally, the maximum of dielectric losses for free water is to be found at frequency around 20 GHz. Thus, the presence of the water can be detected by the measurement of phase shift and attenuation of the microwave transmitted through the tested sample. Alternatively, parameters of resonance curve can be determined in case if a resonant sensor is used.

CN108535283 discloses a device and a method used for detecting water content in oil. The device comprises a test protective pipe arranged in an oil storage tank. A microwave detector for detecting the water content of the crude oil outside the test protective pipe is arranged in the testing protective pipe. One of the embodiments disclosed in CN108535283 concern microwave radiation emitted by a microwave generator and then transmitted to a microwave receiver through the crude oil to be measured and the attenuation value of the microwave power and the change value of the phase shift are obtained. Then the moisture content in the crude oil according to the attenuation value and the phase shift change value is calculated.

US20060145709 discloses a permittivity based method of determining the composition of a multiphase fluid, such as a flowing petroleum effluent, an emulsion of water and oil or a foam of oil and gas. Permittivity is determined based on phase shift between microwave components having different frequencies. A disadvantage of such approach is that normal fluctuations of permittivity of fluid may result in false positive warnings about contamination.

A microwave sensor for measurement of water contamination in fuel known from publication of G. Andria et al, "Design of a microwave sensor for measurement of water in fuel contamination", Measurement, Vol. 136, March 2019, pp. 74-81, doi.org/10.1016/j.measurement.2018.12.076, utilizes sensor based on a section of coaxial transmission line with sleeves attached to the main pipe to fill the coaxial line with fuel. The sensor operates in the frequency range 2-8 GHz and is about 100 mm long. The estimate of sensitivity of the sensor to the water content obtained by authors is 0.6 mdB/ppm that yields decrease of the transmitted microwave signal only 0.12 dB at 200 ppm of water content (the limit imposed by EN590 standard). The reliable measurement of such signal variations is a challenging task because even properly calibrated professional network analyzers like Keysight N5222A have the measurement uncertainty of magnitude about ±0.1 dB.

US20130283892 discloses the cavity resonator sensor having a fluid entrance and a fluid exit forming a fluid flow path through the cavity. This cavity resonator may be used in a system comprising also a high- frequency source and high-frequency detector, to detect properties of a fluid. This sensor may suffer from degradation of quality factor caused by contaminations from the fluid gathered in the "pockets" of the cavity interior and around the high-frequency couplers to the transmitter and the receiver. US2013283892A1 discloses a cavity resonator comprising: a cavity having a fluid entrance and a fluid exit forming a fluid flow path through the cavity. A shorting plate within the cavity arranged within the fluid flow path. The cavity resonator may be used in a system for detecting properties of a fluid, where the system also comprises a fluid supply, a high frequency supply, and a detector for detecting one or more resonant frequencies of the cavity resonator.

Another problem, general for all indirect methods, arises from the unstable physical properties of the petroleum products. Depending on the crude oils used and the refinery processes available, diesel and gasoline represent the mixtures of several dozens of hydrocarbons of variable concentrations. Consequently, dielectric permittivity and loss tangent of pure petroleum fuels are not constant either.

Summarizing, the common challenge for all fast indirect methods (resistive, capacitive, microwave) of moisture sensing in fuel is that the moisture content as low as 0.01-0.05% (100-500 ppm) causes so small variations in the measured signals that they can be easily masked by normal fluctuations of physical properties of gasoline or diesel.

Present invention addresses a problem of providing reliable method and device for fast detection of small water contamination of fluid fuel impervious to fluctuations of dielectric properties of the fluid fuel to be examined.

### Summary of the invention

A method of sensing a water contamination in a fluid fuel under test with a use millimeter wave radiation used to measure a resonance curve in a resonance sensor, according to the invention is distinguished by measuring at least a part of a first resonance curve in a resonator comprising reference fuel and at least a part of a second resonance curve in a resonator comprising fuel under test. An assessment of the water contamination is based on comparison of the first and the second resonance curve, with reference to the calibration data. Calibration data may refer to experimental data concerning relation between difference between resonance curves and level of the water contamination.

Advantageously, step of comparison comprises comparison of width of resonance curves. As the inventor found out, a width of the resonant curves proved to be a meaningful measure corresponding to content of water in fuel.

A measurement setup for sensing a water contamination in a fluid fuel under test using millimeter wave radiation, according to the invention has a fuel conduit which is split into measurement path comprising a first sensor and reference path comprising a second sensor. The reference path comprises a filter. The first and the second sensors have resonators adapted to be coupled with millimeter wave transmitter and millimeter wave receiver and having electrical properties affected by the fluid inside the sensor. The measurement setup is useful in execution of the method according to the invention. The filter allows obtaining reference fuel having no, or low contamination level. The measurement setup can be connected in parallel with larger and faster pipeline. The filters are not adequate to provide enough fuel throughput to be used in main pipeline but are enough to allow measuring in real time samples of fuel to provide information regarding contamination. Information read this way can be used to generate alert or signal closing the main pipeline in case of contamination exceeding acceptable level.

Advantageously, the resonators have resonant frequency within a bandwidth of 20 to 30 GHz. This range is particularly useful due to high attenuation of radiation in water.

Advantageously, the resonators have multiple resonant frequencies at millimeter waves frequency band.

Advantageously, the measurement setup has a millimeter wave transmitter and a millimeter wave receiver, both connected to a processing unit, adapted to control the transmitter and to receive signal from receiver, configured to measure at least part of resonance curve of the resonators of the first sensor and the second sensor. Although the measurement setup, according to the invention, can be installed without RF and digital part, only with connection allowing coupling of millimeter waves, it is easier to calibrate and measure if the measurement setup has integrated processing unit, transmitter and receiver, as well as feeding network thereof.

A computer program product comprising a set of instructions adapted to be executed on a processing unit connected with millimeter wave transmitter and millimeter wave receiver, according to the invention comprises instructions which cause that when the transmitter and receiver are coupled with a first resonator sensor and a second resonator sensor, the set of instructions causes execution a method according to the invention by the processing unit. The invention is defined by the independent claims. Further aspects of the invention are outlined in the dependent claims.

### Short description of the drawings

The invention has been described below in detail, with reference to the following figures in which:
Fig. 1 shows schematically a block diagram of an embodiment of the measurement setup according to the invention;
Fig 2 a shows schematically cross section of the resonator sensor applicable in the embodiment of the invention;
Fig. 2b and 2c show perspective views of the sensor shown in Fig. 2a;
Fig. 3 shows exemplary resonance curves corresponding to different water contamination levels;
Fig. 4 shows a plot of exemplary calibration data for extraction of the relation between resonance width and contamination level.

### Detailed description of the embodiments of the invention

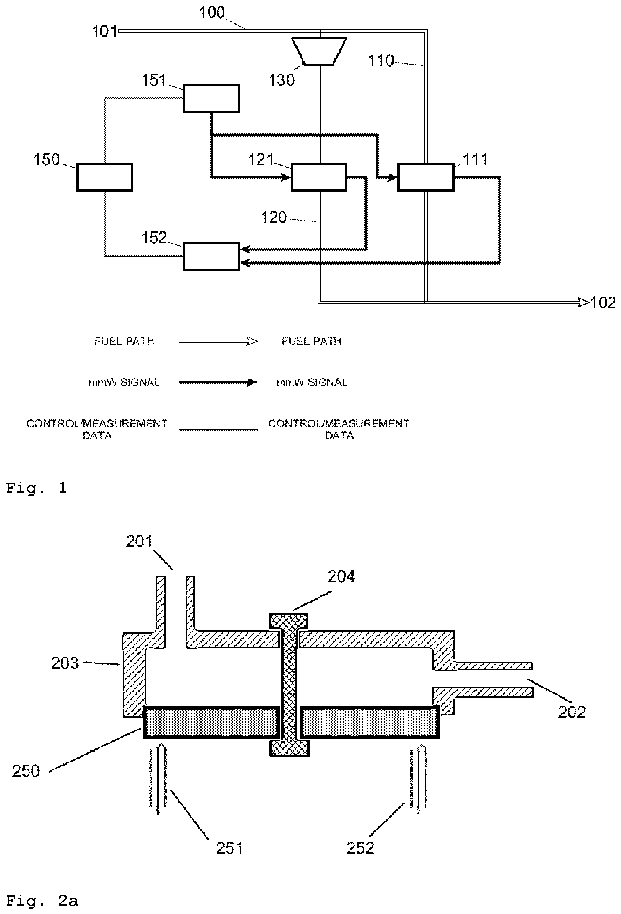

A block diagram of one embodiment of the invention adapted to detect water contamination in gasoline or diesel is shown in Fig. 1. Fuel conduits realized as pipes are schematically denoted with double lines. Paths of millimeter wave signals are denoted with thick, solid arrows, while control signals and data signals are denoted with thin lines.

Main fuel conduit is a pipe **100** in which the fuel enters the measurement setup. It has one inlet **101** and then is split into two paths: measurement path **110** and reference path **120.** Reference path **120** is provided with the filter-separator **130,** which filters out water droplets and other contaminations according to the cell size of filtering media (typically a few microns). The filter can be integrated with junction splitting the main fuel pipe **100** into measurement path **110** and reference path **120.** The fuel flows out of an outlet **103.**

The fuel streams in both paths: measurement path **110** and reference path **120** pass through two identical flow-through sensors **111** and **121.** Both sensors utilize a resonant principle of measurement, based on observation that the resonant frequency and the quality factor of the resonator vary according to the dielectric properties of the fuel passing through the sensor. The sensors are connected to the millimeter-wave transmitter **151** with operating frequency swept over a narrow frequency band around the resonant frequency of the resonators used in the sensors **111** and **121.** In the described embodiment, frequency band about 24 GHz is used as it is close to the frequency where the imaginary part of dielectric permittivity of water reaches its maximum. Outputs of sensors are connected to two-channel receiver **152.** Alternatively, two identical receivers can also be applied. The same applies to transmitters. However using the same transmitter and two-channel receiver makes it easier to avoid common errors.

Experiments showed that whole band 20-30 GHz is applicable and allows detection of contamination. In this frequency band millimeter-wave signal is strongly absorbed by free and emulsified water. Other frequency bands may also be useful, especially used in combination with bandwidth 20-30 GHz. Use of multiple bandwidths requires resonators configured to resonate at multiple frequencies e.g. dielectric disk resonators. Then it is possible to use multiple resonances to assess the level of contamination followed by computer average to improve precision or remove worse cases to be at the safe side.

A two-channel receiver **152,** also adapted to receive signals from the frequency band around 24 GHz receives output signals of the sensors **111** and **121.** Alternatively, two separate receivers can be applied or a one-channel receiver with a signal switch.

Both the frequency-swept transmitter **151** and receiver **152** work under control of a processing unit **150** which sweeps the operating frequency of the transmitter **151,** collects received signal from the receiver **152,** and then calculates resonant frequencies and quality factors of resonators using resonance curves in the both measurement channels. The filter separator **130** eliminates water from the fuel in the reference path but does not affect other properties of the fuel. Therefore, the difference between measurable parameters of the sensors **111** and **121** represents contribution of the water contamination of the fuel. Other factors affecting the dielectric properties of the fuel appear in both measurement path and reference path and therefore do not contribute to the difference of the measurable parameters.

The measurement setup can have integrated millimeter wave part comprising transmitter **151,** receiver **152** and feeding network for coupling with resonators. Transmitter **151** and receiver **152** are connected to the processing unit **150** programmed to measure resonant curves or just specific points thereof to assess the quality factor. Alternatively, the measurement setup can be adapted for coupling external millimeter wave measurement equipment.

The measurement in general case gives most reliable results if the resonance curve is measured around the resonance at least within 3dB range on both sides. However it is possible to learn the difference of quality factors between the resonances using only few points of the curve.

In case of presence of water in gasoline/diesel, the filter-separator in Fig. 1 acts so that it prevents penetration of the water into the reference path **120** while water passes freely into the measurement path **110.** Two identical, flow-through, millimeter-wave sensors **111** and **121** are installed in the measurement path and reference path to evaluate dielectric properties of the liquid in the pipes.

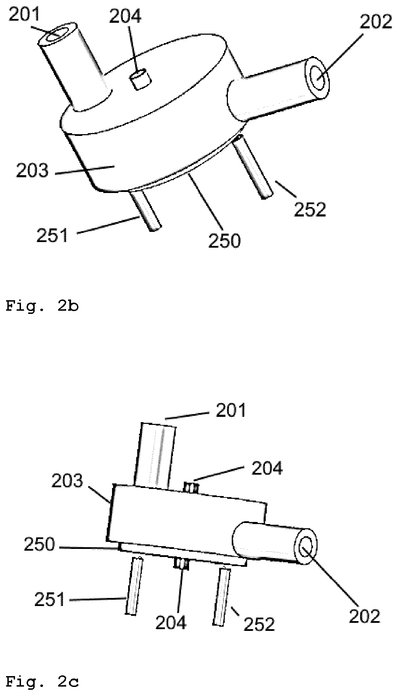

One of possible designs of the flow-through millimeter-wave sensor applicable as sensors **111** and **121** is shown in Fig. 2.

The sensor in Fig. 2 consists of a plastic enclosure with inlet and outlet pipes, and bottom disk, which constitutes the main sensing element. The disk is attached to the enclosure by a screw, though other options are also possible. The bottom disk should be made of a high-permittivity low-loss dielectric material (alumina, sapphire) stable to petroleum products. The sensor body should be made of petroleum-resistant plastic, such as polyethylene terephthalate (PET) or high-density polyethylene (HDPE) . Alternatively, only the lowest cylindrical part of the sensor body adjoining the bottom disk can be made of petroleum-resistant plastic, while the upper part with inlet and outlet pipes can be metallic.

The bottom disk acts as a dielectric disk resonator (DDR), operating on whispering-gallery modes (WGM). Excitation of the WGM signal in DDR is performed by a small loop at the end of coaxial cable, another end of which is connected to the transmitter. The output signal is received by a similar piece of coaxial cable ended with a small loop, mounted near the opposite end of DDR. This coaxial cable is connected to the receiver.

The fuel flows through the sensor enclosure and covers completely DDR at its bottom. This results in a change of resonant frequency and quality factor of DDR that are measured by the processing unit **150.** If there is water in the fuel, it affects resonant frequency and quality factor of DDR. The larger is the water content, the greater is the change of the measured signal.

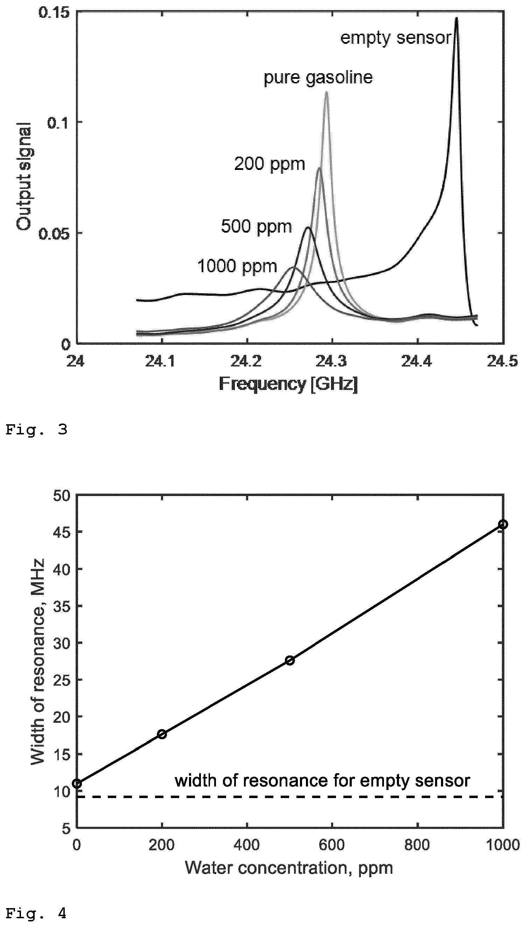

A prototype of the flow-through sensor Fig. 2 was fabricated using a disk made of alumina with diameter of 25 mm and thickness 2 mm. The coaxial cables RG405 with connectors and small loops were used as high-frequency feeders for the connection of DDR to transmitter and receiver. Several gasoline samples with different percentage of water in the range of 0 to 1000 ppm were prepared. The measurement results are shown in Fig. 3.

In Fig. 3, the frequency responses measured by a network analyzer Keysight N5222B are shown: response for empty sensor prototype; response for sensor filled with pure gasoline; and three water-in-gasoline mixtures with water concentration 200, 500 and 1000 ppm. One can see that addition of water slightly shifts the resonance of DDR to lower frequencies (due to high dielectric constant of water) and suppresses the amplitude of resonance (due to very high absorption of water in the frequency range about 20-25 GHz because of the relaxation phenomena). The amplitude of resonance at the water concentration 1000 ppm in Fig. 3 is about 4 times lower than for pure gasoline. Hence, this parameter is preferable to evaluate the water concentration as compared to the shift of resonance frequency. However, the both parameters can be also taken into account simultaneously for better measurement accuracy.

The amplitude measurements in microwave frequency bands suffer from low accuracy for many reasons. More reliable results in the characterization of lossy materials by resonant sensors can be obtained when the quality factor or its reciprocal - width of the resonance curve are measured. The width of resonance curve can be calculated using its fitting by Lorentzian (also called Cauchi) peak-shape function. Such fitting was performed for all resonant curves shown in Fig. 3 and provided another graph which relates the water-in-gasoline concentration to the width of measured resonance curve - Fig. 4. As can be seen, the width of resonance is a nearly linear function of the water concentration in the range of interest 0 - 1000 ppm.

Data shown in Fig. 4 can be used as calibration data for simple readout the contamination level by measuring width of the resonance and comparing against the data.

However, the "zero point", i.e. width of resonance that corresponds to zero concentration of water in Fig. 4, is not known in the real-world applications, in contrast to discussed experiment where a sample of pure gasoline was available. This "zero point" can also vary in dependence of the type of petroleum product, characteristics of crude oil and technology of refinery. This can lead to a large uncertainty in determining the water concentration, especially if it is as low as 0 - 200 ppm. The "zero point" in one embodiment of the invention is granted by filter-separator **130** which removes water from the fuel flow in the reference channel and directs it to another flow-through sensor. Then, from the comparison of measurement results of two sensors, an accurate estimate of the water content in the fuel can be derived.

It is crucial to compare the measurement for sample under test and the reference sample, as parameters of fuel itself vary a lot and affect width of the resonance. Comparison with the reference allows to deconvolute impact caused by contamination with water.

The most crucial element of the system is the filter-separator. Modern filters-separators such as Fleetquard of Cummins Filtration with fine two-micron filtering media exhibit a filtering efficiency up to 99% and remove water and other contaminations from the fuel almost completely.

The measurement results do not depend on the variation dielectric properties of the fuel caused by unstable chemical composition as this variation occurs simultaneously in the both channels. In absence of water, the measurement system is always balanced even if one sort of gasoline/diesel is replaced by another.

Both measurement of the resonance curve or characteristic points thereof and comparison of the result obtained for reference sample and sample under test can be realized automatically by suitable program running on the processing unit. It needs to sweep the frequency band encompassing resonance and record the results. In the measurement setup shown in Fig. 1 it can be done simultaneously in two channels - one corresponding to the reference and the other to sample under test.

If resonators with multiple resonance frequencies are applied the procedure can be repeated for two or more resonant frequencies to obtain more accurate final result.

The invention can be used as an off-the-shelf product installable on the pipelines and adapted for readout with separate millimeter wave measurement equipment realizing the method according to the invention or as single integrated unit having own processing unit and millimeter wave measurement part. The latter can be provided with communication means to send or display the readout or send alarm signal when allowed contamination level is exceeded.

Measurement setups, methods and programs according to the invention are advantageously applicable in gas stations, fuel transportation or even installed in vehicles.

The calibration data may have various format related to difference of quality factors of the resonators of the sensors **111** and **121.** It may be plot, table or structure in memory representing width of the resonance, quality factor itself, difference in width of the resonance or differences in quality factors of the resonators of the sensors.

The program according to the invention may be stored in ROM memory, stored in random access memory, HDD drive, SDD drive, portable memory or delivered via communication network.

The processing unit may be realized as microcontroller, signal processor programmable gate array, application specific integration circuit or hybrid thereof.

## Claims

1. A method of sensing a water contamination in a flowing fluid fuel under test with millimeter wave radiation used to measure a resonance curve in a resonance sensor, wherein
at least a part of a first resonance curve is measured in a resonator of a second sensor (**121**) comprising reference fuel having low or no contamination, obtained in real time with filtration of a sample of the fuel under test and
at least a part of a second resonance curve is measured in a resonator of a first sensor (111) comprising fuel under test and
an assessment of the water contamination is based on comparison of the first and the second resonance curve, with reference to calibration data representing a relation between the level of contamination and the resonance curves,
wherein the resonators have a resonant frequency within a range of 20 to 30 GHz and measurements are taken at frequencies within frequency band between 20 and 30 GHz.

2. Method of sensing according to the claim 1, wherein comparison comprises comparison of width of resonance curves.

3. A measurement setup for sensing a water contamination in a flowing fluid fuel under test using millimeter wave radiation, **characterized in that** it has a fuel conduit (100) which is split into a measurement path (120) comprising a first sensor (111) and a reference path (110) comprising a second sensor (121), wherein the reference path comprises a filter (130) and the first sensor (111) and the second sensor (121) have a resonator adapted to be coupled with a millimeter wave transmitter (151) and a millimeter wave receiver (152) and having electrical properties affected by the fluid inside the sensor, wherein the resonators have a resonant frequency within a bandwidth of 20 to 30 GHz.

4. Measurement setup according to the claim **characterized in that** the resonators have multiple resonant frequencies.

5. Measurement setup according to any of the claim 3 or 4, comprising a millimeter wave transmitter (**151**) and a millimeter wave receiver (**152**), both connected to a processing unit (**150**), adapted to control the transmitter (**151**) and receive a signal from the receiver (**152**), configured to measure at least part of the resonance curve of the resonators of the first sensor (111) and the second sensor (121).

6. A computer program product, comprising a set of instructions adapted to be executed on a processing unit (150) connected with the device of claim 5, the set of instruction causing execution by the processing unit (150) of a method as defined in claim 1.

## Patentansprüche

1. Ein Verfahren zum Erfassen einer Wasserverschmutzung in einem fließenden, flüssigen, zu prüfenden Kraftstoff mit Millimeterwellenstrahlung, die zur Messung einer Resonanzkurve in einem Resonanzsensor verwendet wird, wobei
zumindest ein Teil einer ersten Resonanzkurve in einem Resonator eines zweiten Sensors (**121**) gemessen wird, der einen Referenzkraftstoff mit geringer oder keiner Verschmutzung enthält, der in Echtzeit durch Filtration einer Probe des zu prüfenden Kraftstoffs erhalten wird, und
zumindest ein Teil einer zweiten Resonanzkurve wird in einem Resonator eines ersten Sensors (**111**) gemessen, der den zu prüfenden Kraftstoff enthält, und
eine Bewertung der Wasserverschmutzung auf dem Vergleich der ersten und der zweiten Resonanzkurve beruht, wobei auf Kalibrierungsdaten Bezug genommen wird, die eine Beziehung zwischen dem Verschmutzungsgrad und den Resonanzkurven darstellen,
wobei die Resonatoren eine Resonanzfrequenz in einem Bereich von 20 bis 30 GHz haben und die Messungen bei Frequenzen in einem Frequenzband zwischen 20 und 30 GHz durchgeführt werden.

2. Ein Verfahren zur Messung nach Anspruch 1, wobei der Vergleich den Vergleich der Breite der Resonanzkurven umfasst.

3. Eine Messanordnung zum Erfassen einer Wasserverschmutzung in einem fließenden flüssigen Kraftstoff unter Verwendung von Millimeterwellen-Strahlung, **dadurch gekennzeichnet, dass** sie eine Kraftstoffleitung (**100**) aufweist, die in einen Messpfad (**120**) mit einem ersten Sensor (**111**) und einen Referenzpfad (**110**) mit einem zweiten Sensor (121) aufgeteilt ist, wobei der Referenzpfad ein Filter (**130**) umfasst und der erste Sensor (**111**) und der zweite Sensor (**121**) einen Resonator aufweisen, der mit einem Millimeterwellen-Sender (**151**) und einem Millimeterwellen-Empfänger (**152**) gekoppelt werden kann und elektrische Eigenschaften aufweist, die durch das Fluid im Inneren des Sensors beeinflusst werden, wobei die Resonatoren eine Resonanzfrequenz innerhalb einer Bandbreite von 20 bis 30 GHz aufweisen.

4. Eine Messanordnung nach Anspruch 3, **dadurch gekennzeichnet, dass** die Resonatoren mehrere Resonanzfrequenzen aufweisen.

5. Eine Messanordnung nach einem der Ansprüche 3 oder 4, umfassend einen Millimeterwellen-Sender (**151**) und einen Millimeterwellen-Empfänger (**152**), die beide mit einer Verarbeitungseinheit (**150**) verbunden sind, die so ausgelegt ist, dass sie den Sender (**151**) steuert und ein Signal von dem Empfänger (**152**) empfängt, und die so konfiguriert ist, dass sie zumindest einen Teil der Resonanzkurve der Resonatoren des ersten Sensors (**111**) und des zweiten Sensors (**121**) misst.

6. Ein Computerprogrammprodukt, das einen Satz von Anweisungen umfasst, die zur Ausführung auf einer mit der Vorrichtung nach Anspruch 5 verbundenen Verarbeitungseinheit (**150**) geeignet sind, wobei der Satz von Anweisungen die Ausführung eines Verfahrens nach Anspruch 1 durch die Verarbeitungseinheit (**150**) bewirkt.

## Revendications

1. Un procédé de détection d'une contamination par l'eau dans un carburant fluide en écoulement en cours d'essai avec un rayonnement d'ondes millimétriques utilisé pour mesurer une courbe de résonance dans un capteur de résonance, dans lequel
au moins une partie d'une première courbe de résonance est mesurée dans un résonateur d'un second capteur (**121**) comprenant un carburant de référence peu ou pas contaminé, obtenu en temps réel par filtration d'un échantillon du carburant testé et
au moins une partie d'une deuxième courbe de résonance est mesurée dans un résonateur d'un premier capteur (**111**) comprenant le carburant testé et
une évaluation de la contamination par l'eau est basée sur la comparaison de la première et de la deuxième courbe de résonance, en référence aux données d'étalonnage représentant une relation entre le niveau de contamination et les courbes de résonance,
dans lequel les résonateurs ont une fréquence de résonance comprise entre 20 et 30 GHz et les mesures sont effectuées à des fréquences comprises dans la bande de fréquences entre 20 et 30 GHz .

2. Le procédé de détection selon la revendication 1, dans lequel la comparaison comprend la comparaison de la largeur des courbes de résonance.

3. Une installation de mesure pour détecter une contamination par l'eau dans un carburant fluide en cours d'essai à l'aide d'un rayonnement d'ondes millimétriques, **caractérisée en ce qu'**elle a un conduit de carburant (**100**) qui est divisé en un chemin de mesure (**120**) comprenant un premier capteur (**111**) et un chemin de référence (**110**) comprenant un second capteur (**121**), dans laquelle le chemin de référence comprend un filtre (**130**) et le premier capteur (**111**) et le second capteur (**121**) ont un résonateur adapté pour être couplé à un émetteur d'ondes millimétriques (**151**) et à un récepteur d'ondes millimétriques (**152**) et ayant des propriétés électriques affectées par le fluide à l'intérieur du capteur, dans laquelle les résonateurs ont une fréquence de résonance dans une bande passante de 20 à 30 GHz.

4. L'installation de mesure selon la revendication 3, **caractérisée en ce que** les résonateurs ont des fréquences de résonance multiples.

5. L'installation de mesure selon l'une des revendications 3 ou 4, comprenant un émetteur d'ondes millimétriques (**151**) et un récepteur d'ondes millimétriques (**152**), tous deux connectés à une unité de traitement (**150**), adaptée pour commander l'émetteur (**151**) et recevoir un signal du récepteur (**152**), configurée pour mesurer au moins une partie de la courbe de résonance des résonateurs du premier capteur (**111**) et du second capteur (**121**).

6. Un produit de programme informatique, comprenant un ensemble d'instructions adaptées pour être exécutées sur une unité de traitement (**150**) connectée au dispositif selon la revendication 5, l'ensemble d'instructions provoquant l'exécution par l'unité de traitement (**150**) d'un procédé tel que défini dans la revendication 1.
